# EUROPEAN PATENT APPLICATION

(11) **EP 2 395 468 A1**
(43) Date of publication of application: **14.12.2011**
(21) Application number: 11004613.3
(22) Date of filing: 07.06.2011
(51) Int. Cl.: G06Q 30/00

(54) **Semantic user interface data assembling**

(30) Priority: 08.06.2010 US 795677
(71) Applicant: SAP AG, 69190 Walldorf (DE)
(72) Inventor: Heidasch, Robert, 69190 Walldorf (DE)
(74) Representative: Müller-Boré & Partner Patentanwälte

(57) **Abstract**

A system and method for semantic user interface data assembling are described. In various embodiments, a system creates mapping between business object definitions and user interface elements definitions to generate executable user interface elements. The system further exposes the executable user interface elements as web services to web services consumers. In various embodiments, a method for building business application using executable user interface elements, business object definitions and business data is described. In various embodiments, executable user interface elements and business object definitions may e stored on local storage and subsequent attempts to build the business application may involve retrieval of the business data only.

## Description

### TECHNICAL FIELD

The invention relates generally to enterprise services architecture applications, and more specifically, to separating semantic user interface data assembling.

### BACKGROUND

Organizations today adopt Service-Oriented Architecture (SOA) in their Information Technology (IT) landscapes to model and deploy business applications. Business processes may be packaged as services in a Service-Oriented Architecture (SOA) implemented on computer systems of various platform types. SOA facilitates the integration and interaction of applications on various platforms via communication protocols using messages. Messages may flow between various systems, thus exposing the communication between applications and the data contained therein to different vulnerabilities and security threats.

In today's connected communication-intensive business activities, there may be a need to ensure that data used in a business process is adequately protected. Further, as business data is distributed to a diverse set of users on various platforms, such as, mobile devices, web applications, workstations, and others, there may be a need to ensure that if business data is intercepted over a network connection, the business data may remain unusable to a third party.

### SUMMARY

Various embodiments of systems and methods for semantic user interface data assembling are described herein. These and other benefits and features of embodiments of the invention will be apparent upon consideration of the following detailed description of preferred embodiments thereof, presented in connection with the following drawings.

In various embodiments, a system is presented. In various embodiments, the system may be implemented to run business applications. Further, the system may receive business data, business object definitions, and user interface definitions via one or more channels from one or more repositories. The system may assemble the business data, business object definitions, and user interface definitions in a comprehensive business application to perform one or more tasks, one or more activities, or one or more business processes.

In various embodiments, a system of the embodiments may receive business data, business object definitions, and user interface definitions to display a business application at a first attempt of a user to use the business application. At subsequent attempts of the user to access functionality of the business application, the system of the embodiments may transfer business data only if the system of the embodiments determines the definitions transferred previously are up to date.

In various embodiments, a method is presented. The method may model, at design time, business applications via separating business application components in one or more groups such as, business data, business objects definitions, and user interface definitions.

In various embodiments, another method is presented. The method may implement, at run time, business applications using web services. The method may further package business data, business object definitions, and user interface definitions as web services provider packages to be provided to web services consumers over a communications network.

### BRIEF DESCRIPTION OF THE DRAWINGS

The claims set forth the embodiments of the invention with particularity. The invention is illustrated by way of example and not by way of limitation in the figures of the accompanying drawings in which like references indicate similar elements. The embodiments of the invention, together with its advantages, may be best understood from the following detailed description taken in conjunction with the accompanying drawings.
Figure 1 is a block diagram of a business application model according to various embodiments.
Figure 2 is a block diagram of a design time model of a business application modeled using web services according to various embodiments.
Figure 3 is a block diagram of the business application at runtime according to various embodiments.
Figure 4 is a flow diagram of a method for user interface semantic data assembling according to various embodiments.
Figure 5 is a flow diagram of a method for generating executable user interface elements according to various embodiments.
Figure 6 is a block diagram of a method for generating a business application for a first time according to various embodiments.
Figure 7 is a block diagram of a system according to another embodiment.

### DETAILED DESCRIPTION

Embodiments of techniques for semantic user interface data assembling are described herein. In the following description, numerous specific details are set forth to provide a thorough understanding of embodiments of the invention. One skilled in the relevant art will recognize, however, that the invention can be practiced without one or more of the specific details, or with other methods, components, materials, etc. For example, reference to vertical or horizontal direction herein can be seen as a convention and changed when practicing the invention. In other instances, well-known structures, materials, or operations are not shown or described in detail to avoid obscuring aspects of the invention.

Reference throughout this specification to "one embodiment", "this embodiment" and similar phrases, means that a particular feature, structure, or characteristic described in connection with the embodiment is included in at least one embodiment of the present invention. Thus, the appearances of these phrases in various places throughout this specification are not necessarily all referring to the same embodiment. Furthermore, the particular features, structures, or characteristics may be combined in any suitable manner in one or more embodiments.

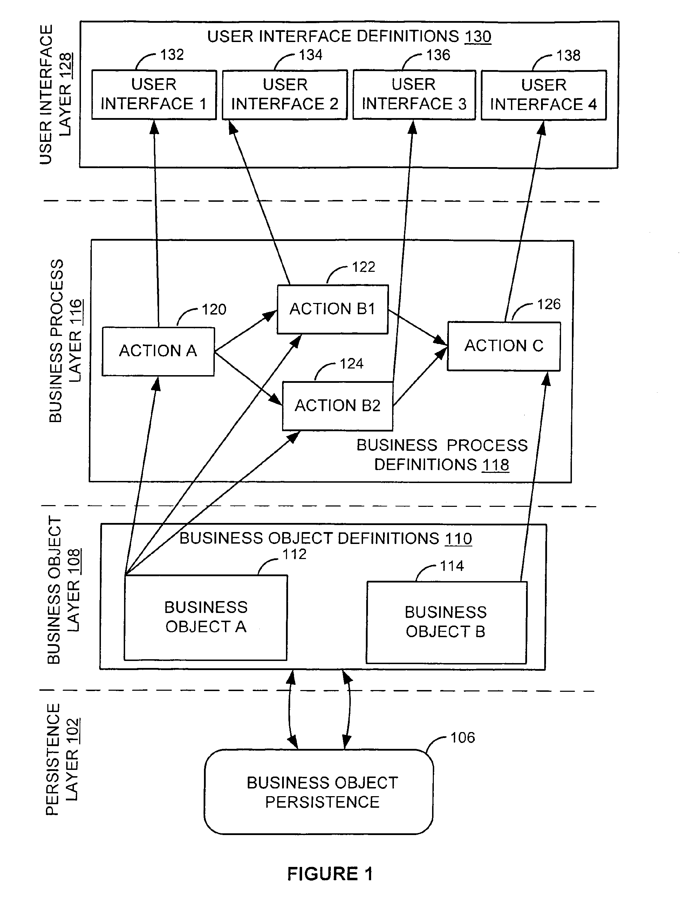

In various embodiments, business applications are modeled in layers and each layer may serve as an abstraction of a component type, that is, each layer of an application may handle components of a certain type. Figure 1 is a block diagram of a business application model according to various embodiments. Referring to Figure 1, a business application is modeled in a number of layers. For example, at the persistence layer 102, business data is stored in business object persistence 106. At the business object layer 108, the business object definitions 110 manages business object definitions, such as data structures, business logic, data types. In other words, the business logic that the business application implements, is modeled in business objects and each business object may provide some functionality, such as business object A 112 and business object B 114. At the business process layer 116, the functionality required by the business application is modeled in a business process in the business process definitions 118.

A business process may describe an execution of a business goal as receiving a set of inputs, manipulating the received inputs (e.g., business data), and producing a set of outputs (e.g., business data). A business process represents a set of activities describing a fulfillment of a business task or a collection of business tasks in a specific order. As seen in Figure 1, to accomplish activities, the business application requests business data from the business object persistence 106 via the business objects 112 and 114. Each action in the business process definitions 118 requires some functionality, thus, business object A 112 provides functionality to Action A 120, Action B1 122, and Action B2 124, while business object B 114 provides functionality to Action C 126. To provide the functionality of the business application to a user, each action may be assigned to a user interface element to be displayed on one or more screens on one or more user interfaces on one or more devices. User interface definitions are modeled at the user interface layer 128 in the user interface definitions 130, such as user interface 1 132, user interface 2 134, user interface 3 136, and user interface 4 138. Each of the actions 120 to 126 is assigned to a user interface element 132 through to 138, respectively.

In various embodiments, web services may be used to deliver the functionality of business applications to various users over diverse communication protocols on numerous platforms, such as mobile devices, desktops, network terminals, workstations, and others. Using web services, data transfer is performed using open, platform and language independent standards. Using web services, a service provider publishes a service for use by service consumers. At design time, a web service provider may model business object definitions, for example, application logic, element identifiers, format definitions, actions, events, and assigned application logic elements. Further, each of the modeled elements may be assigned to user interface elements at the web service consumer side. At runtime, such definitions and assignments are resolved by the client via the web services consumer and the functionality of the business application is provided to users.

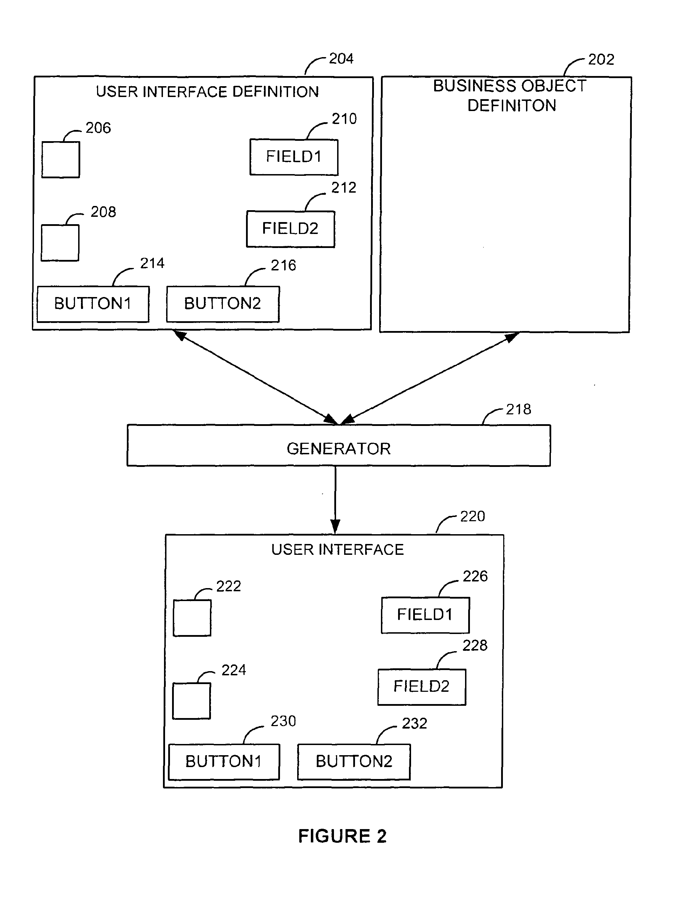

In various embodiments, using web services, business application components may be separated in types, for example, business data, business object definitions, and user interface definition. Figure 2 is a block diagram of a design time model of a business application modeled using web services according to various embodiments. Referring to Figure 2, business object definition 202 represents a business object to hold business application semantic information. The semantic information provides an implementation of the business logic required of the application. In other words, the semantic information is what organizes and gives meaning to business data (without a semantic structure, data may not be meaningful information). The business object definition 202 may maintain a number of definitions of elements and definitions of actions (e.g., referring to Figure 1, the business object definition may hold definitions representing the business object layer 108 and the business process layer 116).

For example, the business object definition 202 may define a number of elements, and each element may be defined via an element identifier, a data type for the elements, a format definition, an element name, and one or more semantic validators. Semantic validators may be used to describe the business meaning of an element and its assignments to groups of elements. Further, the business object definition 202 may define actions and operations, and prescribe which actions and operations may be called by user interface elements to manipulate business data.

The user interface definition 204 provides a number of user interface elements to expose the functionality of the business application to a user (e.g., user interface layer 128 of Figure 1). To be able to provide functionality, each user element is mapped to a definition from the business object definition 202. For example, checkboxes 206 and 208 may be assigned to a verification operation. Fields 1 and 2 at blocks 210 and 212 may be mapped to business object definitions that may load data to be displayed. Buttons 1 and 2 at blocks 214 and 216 may be mapped to actions to trigger data manipulation.

Using such assignments between elements in the business object definition 202 and the user interface definition 204, the generator 218 resolves mappings between elements and generates user interface 220. The user interface 220 provides checkboxes 222 and 224, fields 226 and 228, and buttons 230 and 232 that expose the functionality of the business application to users. The user interface 220 is a particular user interface generated for a particular business object via the business object definition and via an assignment of the business object definition to user interface elements definitions. Thus, while blocks 202 and 204 are definitions, block 220 is an instance of a user interface as per the requirements of the business object definition in block 202.

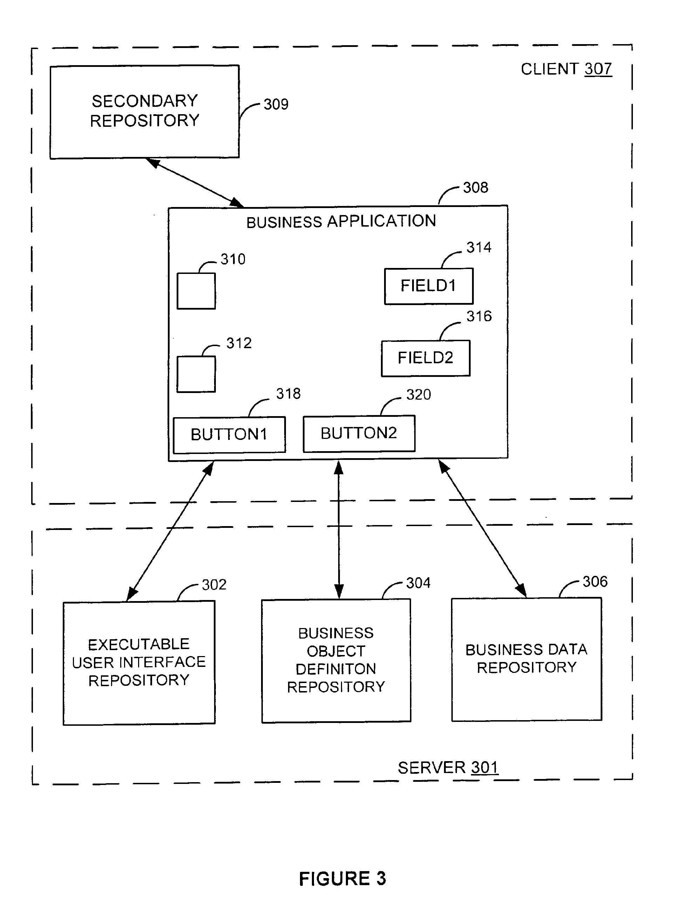

Figure 3 is a block diagram of the business application at runtime according to various embodiments. Referring to Figure 3, executable user interface repository 302 manages the generated executable user interface (e.g. user interface 220 of Figure 2). The business object definition repository 304 manages business object definitions (e.g., from business object layer 108 of Figure 1, and business object definition 202 of Figure 2). The business data repository 306 manages business data relevant for the application (e.g., business object persistence 106 of Figure 1). As these three components are stored in separate repositories on one or more servers such as server 301, the business application 308 on client 307 obtains necessary data from each repository and builds a complete application to be used by a user no client 307. Thus, business application 308 combines business data, semantic information, and user interface information from the respective repositories 302, 304, and 306, to provide business functionality to users via user interface elements such as checkboxes 310 and 312, buttons 318 and 320, fields 314 and 316, and others.

Further at runtime, business application 308 may load information from each repository at a first attempt. After the first attempt to load functionality, business application 308 maintains definitions from repositories (e.g., at local stores such as secondary repository 309). At each subsequent attempt, business application 308 may check if versions of definitions in secondary repository 309 are up to date and attempt to obtain updated definitions from repositories if locally stored versions are outdated.

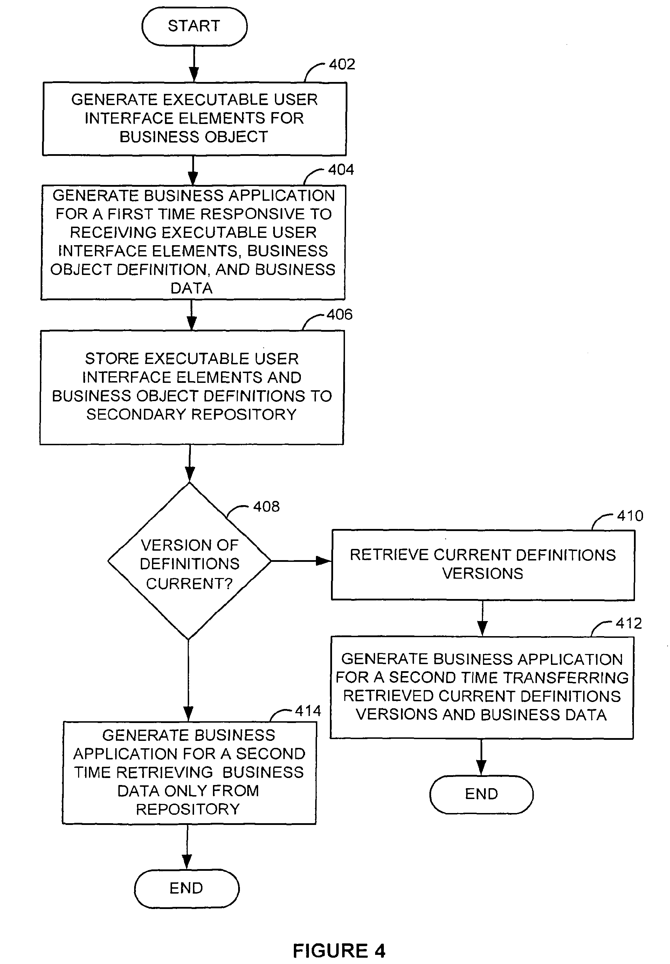

Figure 4 is a flow diagram of a method for user interface semantic data assembling according to various embodiments. In various embodiments, the method as described in Figure 4 may be performed by components as described in Figures 2 and 3. Referring to Figure 4, at block 402, executable user interface elements are generated for a business object (e.g., by a generator such as generator 218 of Figure 2). To enable user interface elements to provide business functionality in a business application, user interface definitions may be mapped to business object definitions. Such mappings may be resolved to produce executable user interface elements that may expose functionality in the business application and capture user interaction with the business application.

At block 404, the business application is generated for a first time. As seen in Figure 1, the business application requires a number of components to provide functionality at each business application layer. According to various embodiments, the required components may be exposed as web services. The web services consumers may receive the components and build the business application at runtime for a user (e.g., on a client platform) to perform tasks as per a business process relevant for an organization. As seen in Figure 3, business object definitions are stored in a business object definition repository, business data is stored in a business data repository, and executable user interface elements are stored in an executable user interface repository.

In various embodiments, a client platform may retrieve the components relevant for the business application from each repository and build the business application at runtime. In the generated business application, the executable user interface elements are bound to business objects and actions via the definitions from the business object repository. Further, business objects may require business data to perform actions as per the business process the business application performs activities from. After the business application completes the tasks as per the business process, business data is returned to the business data repository for storage.

At block 406, business object definitions and executable user interface elements are stored on the client platform where the application is generated (e.g., in secondary repository 309 on the client 307). Thus, if the business application is generated for a second time (or any subsequent time) only the business data may have to be loaded from the business data repository (e.g., business data repository 306 on the server 301 in Figure 3) for the business application to run. Business applications may handle large amounts of data and it may not be feasible to store data on the client platform from a resource consumption standpoint. Further, for security and consistency purposes, business data should be maintained at a central repository serving numerous client platforms. Finally, some of the data may be transactional data (e.g., data that changes over time, or data that is transient in nature) and as such, updated business data may be required by a user each time the user logs on to the business application.

If the business application is generated for a second time, at block 408, a check is performed to determine if the versions of the business object definitions and the executable user interface elements are current. In various embodiments, such a check may be performed by comparing versions on the client platform with versions in the respective repositories (e.g., 302 and 304 in Figure 3). In various embodiments, version comparisons may be performed via comparing versioning attributes, or by setting flags and the like

If the check at block 408 determines that the versions are different, up-to-date versions are retrieved from the respective repositories at block 410. Further, at block 412, business data is loaded from the business data repository (e.g., 306 in Figure 3) and the application is generated with updated executables user interface definitions and updated business object definitions and updated business data, each loaded from a respective repository (e.g., repositories 302-306 in Figure 3). Thus, the business application may be loaded and run for a second or subsequent time on a client platform.

If the check at block 408 determines that the versions are current, at block 414, the business application is generated for a second time via transferring business data only from the business data repository.

The method as described in Figure 4 outlines a separation between business data, business semantic (e.g., business objects and actions), and user interface. The user interface and business semantic may not change as much over time as business data. Thus, at most times, while users attempt to run the business application, only the business data may be transferred.

Transferring business data separately from the business object definitions and executable user interface elements may be beneficial for a number of concerns in the IT landscape such as security, resource consumption, network utilization, and others. For example, from a security standpoint, if the business data is intercepted over a communications network, to a third party the business data may be simply data with no meaning because it is the business object definitions that give the data semantic structure and produce meaningful information out of business data. Thus, a third party may not be able to harm an organization by simply obtaining business data over a communications network.

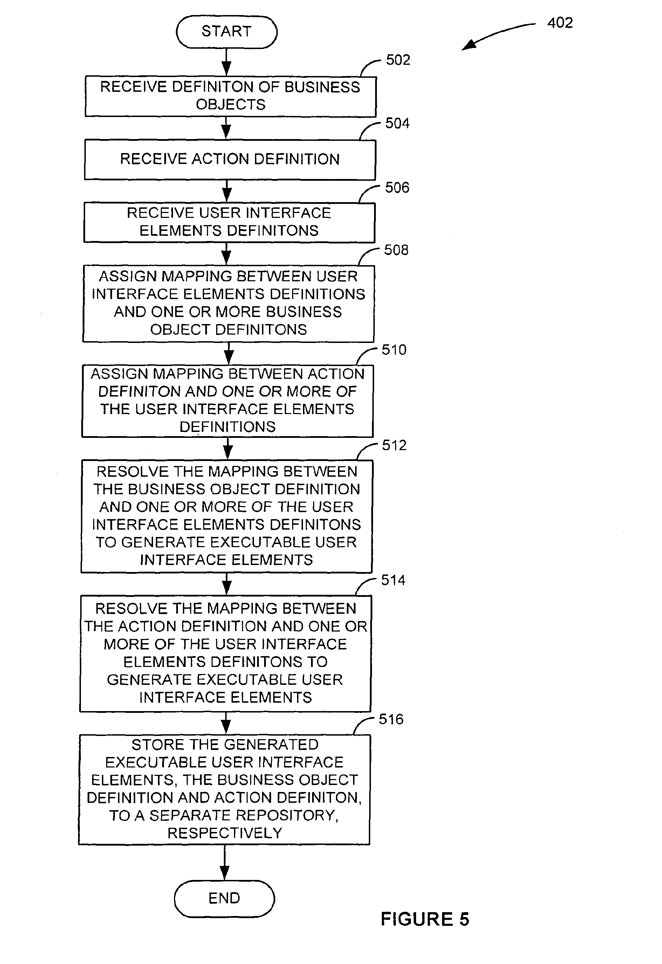

Figure 5 is a flow diagram of a method for generating executable user interface elements according to various embodiments (e.g., block 402 of Figure 4). In various embodiments, the method as described in Figure 5 may be performed by components as described in Figure 2. Referring to Figure 5, at block 502, one or more definitions of a business objects are received. A definition of a business object (e.g., business object definitions 202 of Figure 2) may include elements that may be assigned to or used by user interface elements, such as, element identifiers, data types of elements, format definition of elements, element name, and semantic validators (i.e., businessrelated descriptions that describe the particular element and its groups). At block 504, action definitions are received. Actions may be assigned to user interface elements to enable user interface elements to trigger tasks, to capture user interaction, or to trigger data manipulation.

At block 506, one or more user interface elements definitions are received (e.g. block 204 of Figure 2). At this point, all the necessary building blocks of an application are present but there is connection between them, that is, the building blocks have no knowledge as to how to operate and interact with each other to carry out tasks per a business process as may be required by a business application.

Thus, at block 508, a mapping is assigned between the one or more business object definitions and one or more of the user interface elements definitions. For example, a button in the user interface may be assigned to a business object so that when the button is pushed by a user, a piece of business logic may be performed by the business object in response.

At block 510, a mapping is assigned between the action definition and one or more of the user interface elements definitions. Via such a mapping a user interface element may trigger an action.

At block 512, the mapping between the business object definition and the user interface elements definition is resolved (e.g., by a generator such as generator 218 of Figure 2). At block 514, the mapping between the action definition and the user interface elements definition is resolved (e.g., by a generator such as generator 218 of Figure 2). Resolving the mapping means that the elements receive instructions how to behave at runtime, for example, what data and what type of data is needed by a business object or triggered to be manipulated by an action invoked by a user interface element. The result of blocks 512 and 514 is the executable user interface elements that can be used in an interface of a business application at runtime (e.g., user interface 220 of Figure 2). These executable user interface elements form the particular user interface for a particular business object; in other words, this is an instance of a user interface generated for a business object and an action. Without the assignments, mappings, and resolving the mappings, the user interface elements are simply definitions that cannot be deployed and used in a business application.

At block 516, the generated executable user interface elements are stored to an executable user interface elements repository (e.g. block 302 in Figure 3), and the business object definition and action definition are stored to a business object definition repository (e.g. block 304 in Figure 3).

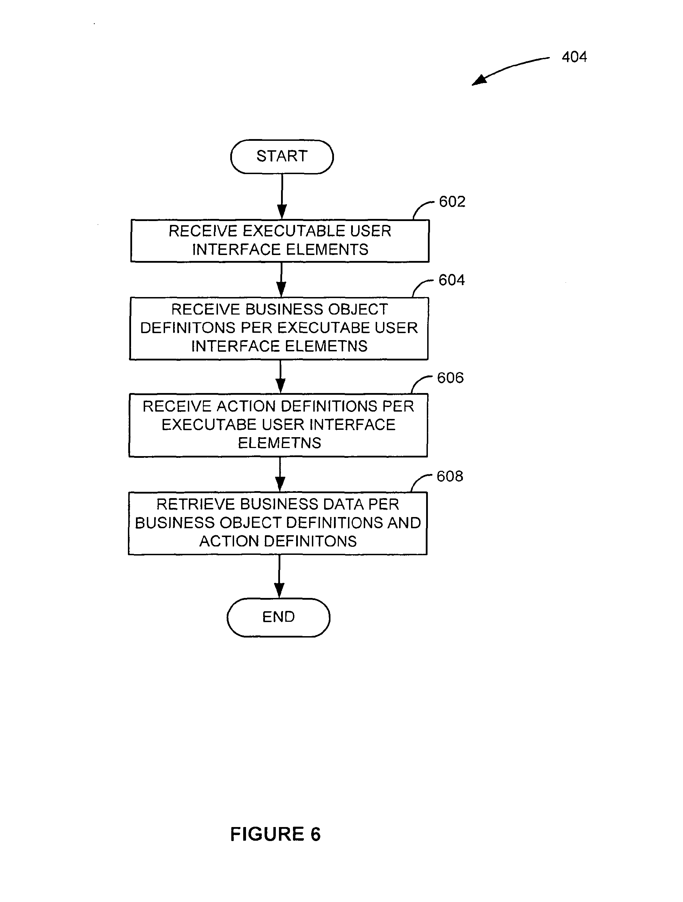

Figure 6 is a block diagram of a method for generating a business application for a first time according to various embodiments (e.g., block 404 of Figure 4). In various embodiments, the method as described in Figure 6 may be performed by components as described in Figure 3. Generating a business application may be performed at a client platform on various devices such as mobile devices, desktops, terminal stations, and others. Referring to Figure 6, at block 602, executable user interface elements are received (e.g., from a repository such as executable user interface repository 302 in Figure 3). At block 604, business objects are received (e.g., from a repository such as business object definition repository 304 in Figure 3). The business objects are determined per the assignments and mappings between business object definitions and user interface definitions (such as assignments at block 508 of Figure 5). At block 606, action definitions are received (e.g., from a repository such as business object definition repository 304 in Figure 3). Actions are identified via assignments and mappings between user interface element definitions and action definitions (such as assignments at block 510 of Figure 5). Finally, at block 608, based on the components loaded in previous steps, business data needed for the business application is loaded from a repository (e.g., business data repository 306 of Figure 3).

In various embodiments, the executable user interface elements, business object definitions, and action definitions may be stored at a local store on the client platform to enable reuse of such components and eliminate roundtrips over a network to load components that may not change as often as business data. Thus, at a subsequent generation of the business application, only business data as needed may be loaded for the business application.

The system and methods described in various embodiments provide a number of benefits. For example, the separation between user interface, business semantic, and business data enables the "separation of concerns" paradigm (as know in the art) to be employed. By grouping components according to their type and storing components in separate repositories, each component group may be treated and managed accordingly. Further, as each component type is transferred to client platforms via a separate communication link (e.g., as seen in Figure 3), there is less likelihood of a third party intercepting the communication an combining the building blocks of a business application together with the business data to collect security sensitive data about an organization. Further, from a resource consumption standpoint, there may be less roundtrip calls between a client platform and a host platform to load components because user interface elements and business object definitions may be stored locally.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components may be implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer-readable media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hard-wired circuitry in place of, or in combination with machine readable software instructions.

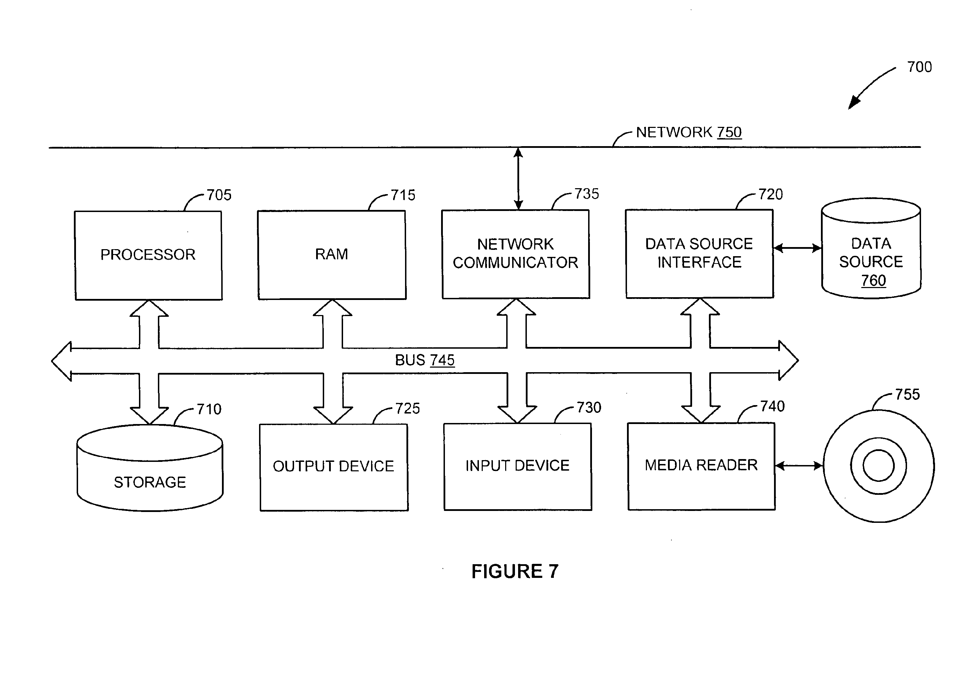

Figure 7 is a block diagram of an exemplary computer system 700. The computer system 700 includes a processor 705 that executes software instructions or code stored on a computer readable storage medium 755 to perform the above-illustrated methods of the invention. The computer system 700 includes a media reader 740 to read the instructions from the computer readable storage medium 755 and store the instructions in storage 710 or in random access memory (RAM) 715. The storage 710 provides a large space for keeping static data where at least some instructions could be stored for later execution. The stored instructions may be further compiled to generate other representations of the instructions and dynamically stored in the RAM 715. The processor 705 reads instructions from the RAM 715 and performs actions as instructed. According to one embodiment of the invention, the computer system 700 further includes an output device 725 (e.g., a display) to provide at least some of the results of the execution as output including, but not limited to, visual information to users and an input device 730 to provide a user or another device with means for entering data and/or otherwise interact with the computer system 700. Each of these output 725 and input devices 730 could be joined by one or more additional peripherals to further expand the capabilities of the computer system 700. A network communicator 735 may be provided to connect the computer system 700 to a network 750 and in turn to other devices connected to the network 750 including other clients, servers, data stores, and interfaces, for instance. The modules of the computer system 700 are interconnected via a bus 745. Computer system 700 includes a data source interface 720 to access data source 760. The data source 760 can be accessed via one or more abstraction layers implemented in hardware or software. For example, the data source 760 may be accessed by network 750. In some embodiments the data source 760 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of embodiments of the invention. One skilled in the relevant art will recognize, however that the invention can be practiced without one or more of the specific details or with other methods, components, techniques, etc. In other instances, well-known operations or structures are not shown or described in details to avoid obscuring aspects of the invention.

Although the processes illustrated and described herein include series of steps, it will be appreciated that the different embodiments of the present invention are not limited by the illustrated ordering of steps, as some steps may occur in different orders, some concurrently with other steps apart from that shown and described herein. In addition, not all illustrated steps may be required to implement a methodology in accordance with the present invention. Moreover, it will be appreciated that the processes may be implemented in association with the apparatus and systems illustrated and described herein as well as in association with other systems not illustrated.

The above descriptions and illustrations of embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize. These modifications can be made to the invention in light of the above detailed description. Rather, the scope of the invention is to be determined by the following claims, which are to be interpreted in accordance with established doctrines of claim construction.

## Claims

1. A computer readable storage medium having computer readable instructions tangibly stored thereon which when executed by the computer, cause the computer to perform a method for semantic user interface data assembling, the method comprising:
generating a business application for a first time responsive to receiving one or more executable user interface elements, one or more business object definitions and one or more business data for a business application, wherein the one or more executable user interface elements and the one or more business object definitions are further stored in a secondary repository;
determining if versions of the one or more executable user interface elements and the one or more business object definitions stored in the secondary repository are current; and
if the versions of the one or more executable user interface elements and the one or more business object definitions stored in the secondary repository are current, generating the business application for a second time using the one or more executable user interface elements and the one or more business object definitions stored in the secondary repository responsive to receiving the one or more business data for the second time.

2. The computer readable storage medium of claim 1, further comprising generating the one or more executable user interface elements, including:
assigning a mapping between the one or more business object definitions and one or more user interface element definitions; and
assigning a mapping between one or more action definitions and the one or more user interface element definitions.

3. The computer readable storage medium of claim 2, wherein the method further comprises:
resolving the mapping between the one or more business object definitions and the one or more user interface element definitions generating one or more executable instructions for the one or more user interface element definitions; and
resolving the mapping between the one or more action definitions and the one or more user interface element definitions generating one or more executable instructions for the one or more user interface element definitions.

4. The computer readable storage medium of any one of the preceding claims, wherein the method further comprises storing the one or more executable user interface elements to an executable user interface repository; and/or
wherein the method further comprises storing the one or more business object definitions to a business object definition repository; and/or
wherein the method further comprises storing the one or more business data to a business data repository.

5. The computer readable storage medium of any one of the preceding claims, wherein generating the business application for a second time further comprises receiving the one or more executable user interface elements, the one or more business object definitions, and the one or more business data if the versions of the one or more executable user interface elements and the one or more business object definitions in the secondary repository are not current.

6. A computerized system including a processor, the processor communicating with one or more memory devices storing instructions, the instructions comprising:
a business data repository configured to manage business data;
a business object definition repository configured to manage one or more business object definitions and one or more action definitions;
a generator configured to assign mappings between the one or more business object definitions, the one or more action definitions, and one or more use interface definitions to generate one or more executable user interface elements; and
exposing the one or more business object definitions, the one or more action definitions, and the one or more executable user interface elements as web services to one or more web service consumers.

7. The computerized system of claim 6, further comprising an executable user interface elements repository operable to manage the one or more executable user interface elements; and/or
further comprising instructions for storing the one or more executable user interface elements on one or more secondary repositories on one or more client platforms.

8. The computerized system of any one of claims 6 to 7, wherein the business object definition repository and the business data repository are stored on one or more databases.

9. The computerized system of any one of claims 6 to 8, wherein the one or more executable user interface elements comprise one or more buttons, one or more fields, one or more checkboxes, and one or more text fields; and/or
wherein the one or more business object definitions comprise one or more elements, each element including one or more attributes, wherein the one or more attributes include element data type, element name, and element identifier.

10. The computerized system of any one of claims 6 to 9, further comprising instructions for storing the one or more business object definitions and the one or more action definitions on one or more secondary repositories on one or more client platforms.

11. A computerized method, comprising:
retrieving one or more business data;
retrieving one or more business object definitions;
retrieving one or more executable user interface elements;
storing the one or more business object definitions and the one or more executable user interface elements on one or more secondary repositories on one or more client platforms; and
combining the one or more business data, the one or more business object definitions, and the one or more executable user interface elements to generate a business application for a first time.

12. The computerized method of claim 11, wherein the one or more business object definitions comprise one or more elements and wherein each element includes:
an element identifier;
an element data type;
an element format attribute;
an element name; and
one or more semantic validators.

13. The computerized method of any one of claims 11 to 12, further comprising:
determining if the one or more business object definitions and the one or more executable user interface elements on the one or more secondary repositories on the one or more client platforms are of a current version; and
updating the one or more business object definitions and the one or more executable user interface elements on the one or more secondary repositories on the one or more client platforms with the current version if a version in the one or more secondary repositories on the one or more client platforms is outdated.

14. The computerized method of claim 13, further comprising retrieving the one or more business data to build the business application for a subsequent time if the version of the one or more business object definitions and the one or more executable user interface elements on the one or more secondary repositories on the one or more client platforms is current.

15. The computerized method of any one of claims 11 to 14, further comprising storing the one or more executable user interface elements to an executable user interface repository; and/or
further comprising storing the one or more business data to a business data repository.
